Europäisches Patentamt

European Patent Office

Office européen des brevets

(11) Veröffentlichungsnummer: **0 292 759 B1**

# (12) EUROPÄISCHE PATENTSCHRIFT

(45) Veröffentlichungstag der Patentschrift: **06.11.91**

(51) Int. Cl.⁵: **B60R 25/00**

(21) Anmeldenummer: **88107302.7**

(22) Anmeldetag: **06.05.88**

(54) **Diebstahl-Sicherungsanlage für Kraftfahrzeuge.**

(30) Priorität: **11.05.87 DE 3715631**

(43) Veröffentlichungstag der Anmeldung:
**30.11.88 Patentblatt 88/48**

(45) Bekanntmachung des Hinweises auf die
Patenterteilung:
**06.11.91 Patentblatt 91/45**

(84) Benannte Vertragsstaaten:
**AT BE CH DE ES FR GB IT LI NL SE**

(56) Entgegenhaltungen:
**DE-A- 3 501 884**

**U. ADLER et al.: "Kraftfahrtechnisches Taschenbuch", Auflage 19, R. Bosch GmbH, 1984, Stuttgart, DE**

(73) Patentinhaber: **Niess, Rosa**
**Nasse Gewand 6**
**W-7928 Giengen/Brenz(DE)**

(72) Erfinder: **Niess, Rosa**
**Nasse Gewand 6**
**W-7928 Giengen/Brenz(DE)**

(74) Vertreter: **Weiss, Peter, Dr. rer.nat.**
**Patentanwalt Dr. Peter H. Weiss Postfach 12**
**50 Zeppelinstrasse 4**
**W-7707 Engen(DE)**

**Beschreibung**

Die Erfindung betrifft eine Diebstahl-Sicherungsanlage für Kraftfahrzeuge gemäß der Gattung des Hauptanspruchs.

Es sind Diebstahl-Sicherungsanlagen bekannt, die mit verschiedenen Kontakten oder Sensoren verbunden sind, die beispielsweise beim Öffnen einer Türe, des Kofferraums oder beim Betätigen des Anlassers ein Sensorsignal an die elektronische Schaltung der Diebstahl-Sicherungsanlage abgeben, die daraufhin einen Alarm oder eine Sperrfunktion auslöst. Die Sperrfunktion kann darin bestehen, daß die Zündung kurzgeschlossen oder der Anlasserstromkreis unterbrochen wird. Bei Fahrzeugen mit elektronischer Einspritzeinlage könnte diese zum Blockieren des Fahrzeugs gegebenenfalls auch von der Diebstahl-Sicherungsanlage abgeschaltet werden.

Da über eine Diebstahl-Sicherungsanlage eine Vielzahl von Funktionen bzw. Sensoren überwacht werden müssen, besteht häufig das Problem, daß zusätzliche Sensoren an die vorhandenen Anschlußklemmen nicht mehr angeschlossen werden können, da sämtliche Anschlußklemmen bereits belegt sind.

Der Erfindung liegt die Aufgabe zugrunde, eine Diebstahl-Sicherungsanlage zu schaffen, bei der nachträglich bei vollständiger Belegung sämtlicher Anschlußklemmen wenigstens ein zusätzlicher Sensor oder dergleichen anschließbar ist.

Die Lösung dieser Aufgabe wird bei einer Diebstahl-Sicherungsanlage der eingangsgenannten Gattung dadurch erhalten, daß der für die Kontrolleuchte vorgesehene Anschluß bezüglich der an diesem Anschluß auftretenden Spannung und/oder des fließenden Stromes überwacht wird und bei Über- oder Unterschreiten eines vorgegebenen Schwellwertes das Alarmsignal ausgelöst wird. Das Alarmsignal veranlaßt dann in der Diebstahl-Sicherungsanlage ein Abschalten wichtiger Motorfunktionen und/oder das Auslösen eines Alarmes. Durch diese Maßnahme ist es möglich, an den Anschluß, der eigentlich für die Kontrolleuchte der Diebstahl-Sicherungsanlage vorgesehen ist, nachträglich die Kontrolleuchte auszustecken und dafür beispielsweise einen Glasbruchmelder, einen Neigungsmelder oder einen Ultraschallgeber anzuschließen. Sollen mehrere dieser Funktionen nachträglich an den Kontrolleuchten angeschlossen werden, so kann hierfür ein Doppelstecker oder Mehrfachstecker verwendet werden.

Bei der bevorzugten Ausführungsform befindet sich der Kontrollanschluß außen am Gehäuse, damit dieser bequem von außen ohne das Gehäuse abnehmen zu müssen zugänglich ist.

Vorteilhafte Weiterbildungen der Erfindung sind in den Unteransprüchen gekennzeichnet.

Die Erfindung wird nachfolgend anhand der Zeichnung näher erläutert. Es zeigen:

Figur 1 eine Diebstahl-Sicherungsanlage mit mehreren von außen zugänglichen Anschlußklemmen,

Figur 2 das Gehäuse der Diebstahl-Sicherungsanlage mit Kontrollanschluß und

Figur 3 einen Schaltplan der Diebstahl-Sicherungsanlage.

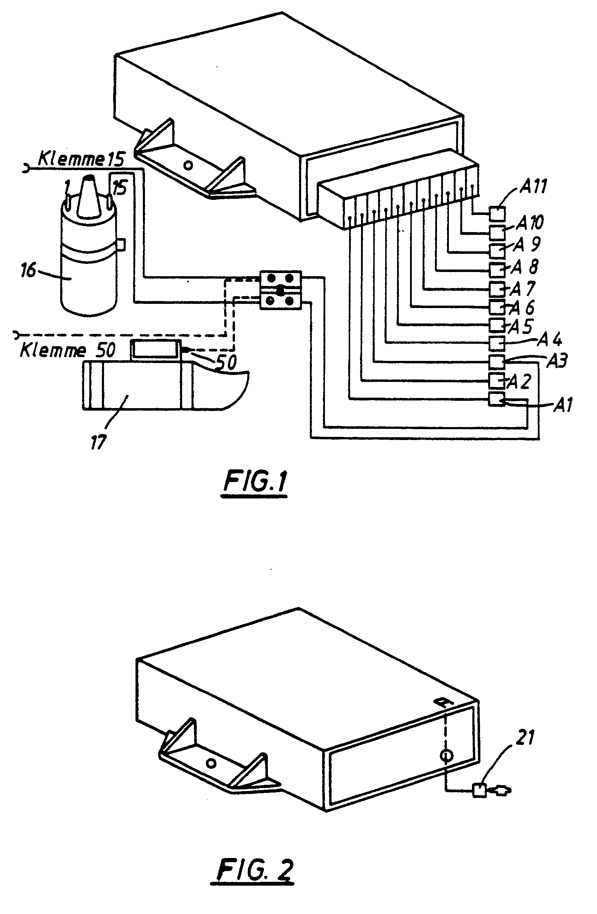

Die in Figur 1 dargestellte Diebstahl-Sicherungsanlage ist mit der Zündspule 16, dem Anlasser 17 an Klemmen 15 und 50 verbunden. Über an der Diebstahl-Sicherungsanlage angeordneten Klemmen 1 bis 11 werden die verschiedenen erforderlichen elektrischen Verbindungen für die erforderliche Diebstahlüberwachung angeschlossen.

Die Anschlüsse 1 bis 11 haben dabei folgende Funktionen:

Anschluß A1: Potentialfreier Anschluß.

Anschluß A2: Eingang für Minuspol der Batterie oder für Fahrzeugmasse.

Anschluß A3: Potentialfreier Anschluß, der in Verbindung mit Anschluß 1 eine Anlassersperre bildet.

Anschluß A4: Eingangsklemme für die Klemme 1 der Zündspule, über die eine Abschaltung der Anlage während der Fahrt erfolgt.

Anschluß A5: Haupteingang zum Ein/Ausschalten der Anlage.

Anschluß A6: Über diesen Anschluß erfolgt eine Ruhestrom-Zubehörsicherung an der Zubehör-Masse, beispielsweise Radiomasse. Eine Alarmauslösung erfolgt, wenn der Anschluß getrennt wird.

Anschluß A7: Ausgangsklemme für den Anschluß an Hupe zur Auslösung eines Alarmsignals.

Anschluß A8: Batterie-Hauptanschluß + 12 Volt.

Anschluß A9: Anschluß für Kontaktschalter der Türen, Motorhaube und des Kofferraumdeckels.

Anschluß A10: Eingang für Zündungsstrom 12 Volt der Klemme 15. Hier wird ein Alarm bei Kurzschließung der Zündung ausgelöst.

Anschluß A11: Ausgangsklemme für den Anschluß der Scheinwerfer oder eines anderen Lichtsignals zur Auslösung eines Lichtalarms.

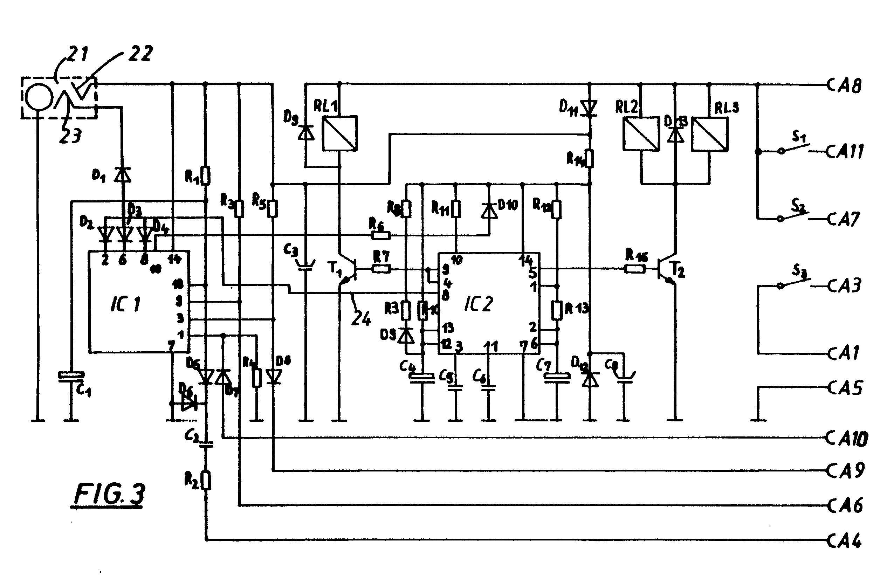

Bei dem in Figur 2 dargestellten Gehäuse ist die Anordnung eines Kontrollanschlusses 21 dargestellt, der für den Anschluß einer hier nicht dargestellten Kontrolleuchte dient. Anstelle der Kontrolleuchte kann am Kontrollanschluß auch ein Sensor, beispielsweise ein Glasbruchmelder, Neigungsmelder oder ein Ultraschallgeber angeschlossen werden, so daß zusätzliche Sicherungsfunktionen von der Diebstahl-Sicherungsanlage wahrgenommen werden können. Zu diesem Zweck überwacht die elektronische Schaltung, wie sie in Figur 3 dargestellt ist, die Spannung und/oder den Strom, der an dem Kontrollanschluß auftritt. Durch diese Überwachung kann beispielsweise festgestellt werden, ob der angeschlossene Neigungsmelder aufgrund einer aufgetretenen Fahrzeugneigung einen Kontakt schließt oder allgemein gesprochen, seinen Innenwiderstand verändert. Wird eine derartige Änderung von der Diebstahl-Sicherungsanlage festgestellt, kann diese Alarm auslösen.

Die in Figur 3 dargestellte Schaltungsanordnung zeigt den Kontrollanschluß 21, der die beiden Anschlußkontakte 22, 23 besitzt. Der Kontrollanschluß 21 ist einerseits über den Anschluß 8 mit der Batteriespannung und andererseits über eine Diode D1 und eine Parallelschaltung weiterer Dioden D2, D3, D4 mit einer integrierten Schaltung IC1 verbunden. Der Kontrollanschluß 21 steht außerdem mit einer weiteren integrierten Schaltung IC2 über eine Leitung 24 in Verbindung.

Die integrierte Schaltungen IC1 und IC2 sind herkömmliche integrierte Schaltungen, die im dargestellten Ausführungsbeispiel den integrierten Halbleiterschaltungen der Firma -SGS- mit der Typennummer HCF 401 06 BC entsprechen. Die in Figur 3 angegebene Nummerierung der Anschlüsse an den beiden integrierten Schaltungen IC1, IC2 entspricht der Nummerierung der beiden genannten bekannten Halbleiterschaltungen.

Die in Figur 3 angegebene elektrische Schaltung besteht aus einer Vielzahl von Dioden D1 bis D13, Widerständen R1 bis R15, Transistoren T1 und T2, Kondensatoren C1 bis C8 und aus drei Relais RL1 bis RL3. Über die Relais RL1 bis RL3 werden die Schalter S1 bis S3 betätigt.

Die rechts im Schaltbild angegebenen Anschlußklemmen A1 bis A11 entsprechen den bereits im Zusammenhang mit Figur 1 beschriebenen Anschlußklemmen.

## Patentansprüche

1. Diebstahl-Sicherungsanlage für Kraftfahrzeuge, die an ihren elektrischen Anschlüssen mit mehreren im Kraftfahrzeug angeordneten Sensoren, Kontakten oder dergleichen verbunden ist, die bei unbefugtem Benutzen des Kraftfahrzeuges die Diebstahl-Sicherungsanlage veranlassen, ein Alarmsignal abzugeben, wodurch ein Alarm oder eine Sperrfunktion ausgelöst wird, und die einen Kontrollanschluß für eine Kontrolleuchte hat, **dadurch gekennzeichnet**, daß der für die Kontrolleuchte vorgesehene Kontrollanschluß (21) bezüglich der an diesem Kontrollanschluß (21) auftretenden Spannung und/oder des fließenden Stromes überwacht wird und bei Über- oder Unterschreiten eines vorgegebenen Schwellwertes das Alarmsignal ausgelöst wird.

2. Diebstahl-Sicherungsanlage nach Anspruch 1, **dadurch gekennzeichnet**, daß der Kontrollanschluß (21) eine am Gehäuse angebrachte Buchse ist, an der wahlweise die Kontrolleuchte oder ein Sensor anschließbar ist.

3. Diebstahl-Sicherungsanlage nach einem der Ansprüche 1 oder 2, **dadurch gekennzeichnet**, daß an dem Kontrollanschluß (21) ein Glasbruchmelder oder ein Neigungsmelder oder ein Ultraschallgeber angeschlossen ist.

4. Diebstahl-Sicherungsanlage nach einem der vorhergehenden Ansprüche, **dadurch gekennzeichnet**, daß über einen Doppel- oder Mehrfachstecker zwei oder mehrere Sensoren an den Kontrollanschluß (21) anschließbar sind.

## Claims

1. Anti-theft device for motor vehicles which is attached at its electrical connections to a plurality of sensors, contacts or the like which are arranged in the motor vehicle and cause the anti-theft device to emit an alarm signal during unauthorised use of the motor vehicle so that an alarm or a blocking function is triggered and which has a control connection for a control lamp, characterised in that the control connection (21) provided for the control lamp is monitored with respect to the voltage occurring at this control connection (21) and/or with respect to the flowing current and the alarm signal is triggered when a predetermined threshold value is exceeded or fallen below.

2. Anti-theft device according to claim 1, characterised in that the control connection (21) is a bush which is arranged on the housing and to which the control lamp or a sensor can be connected selectively.

3. Anti-theft device according to one of claims 1 or 2, characterised in that a glass breakage indicator or an inclination indicator or an ultrasonic generator is connected to the control connection (21).

4. Anti-theft device according to one of the preceding claims, characterised in that two or more sensors can be connected to the control connection (21) via a double or multiple plug.

## Revendications

1. Dispositif antivol pour véhicules à moteur, relié par ses fermetures électriques à plusieurs détecteurs, contacts ou analogues disposés dans le véhicule, qui en cas d'utilisation non autorisée du véhicule, amènent le dispositif antivol à délivrer un signal d'alarme, par lequel une alarme ou une fonction de blocage est déclenchée, comprenant un raccord de contrôle pour une lumière de contrôle, dispositif caractérisé en ce que le raccord du contrôle (21) prévu pour la lumière de contrôle est surveillé en ce qui concerne la tension appliquée à ce raccord de contrôle (21) et/ou le courant qui passe à travers et en ce qu'un signal d'alarme est déclenché lors du sous-dépassement ou du dépassement d'une valeur de seuil prédéterminée.

2. Dispositif selon la revendication 1, caractérisé en ce que le raccord de contrôle (21) est une douille disposée sur le boîtier, douille à laquelle peut être raccordée au choix la lumière de contrôle ou un capteur.

3. Dispositif selon l'une des revendications 1 ou 2, caractérisé en ce qu'un avertisseur de bris de glace ou un avertisseur d'inclinaison ou un émetteur d'ultrasons est raccordé au raccord de contrôle (21).

4. Dispositif selon l'une des revendications précédentes, caractérisé en ce que deux ou plusieurs capteurs peuvent être raccordés au raccord de contrôle (21) au moyen d'une fiche double ou multiple.

_FIG.1_

_FIG. 2_

5

FIG.3